# EUROPÄISCHE PATENTSCHRIFT

(11) **EP 0 674 400 B1**
(45) Veröffentlichungstag und Bekanntmachung des Hinweises auf die Patenterteilung: **23.06.1999**
(21) Anmeldenummer: 95103883.5
(22) Anmeldetag: 16.03.1995
(51) Int. Cl.: H04B 1/56

(54) **Funkgerät**
Radio apparatus
Dispositif radio

(30) Priorität: 24.03.1994 DE 4410284
(43) Veröffentlichungstag der Anmeldung: 27.09.1995
(73) Patentinhaber: SIEMENS AKTIENGESELLSCHAFT, 80333 München (DE)
(72) Erfinder: Hofmann, Ludwig, Dipl.-Ing., D-85304 Ilmmünster (DE)

(56) Entgegenhaltungen:
- EP-A- 0 561 257
- EP-A- 0 576 702
- PATENT ABSTRACTS OF JAPAN vol. 17, no. 148 (E-1338) 24. März 1993 & JP-A-04 315 320 (SONY)
- PATENT ABSTRACTS OF JAPAN vol. 10, no. 340 (E-455) 18. November 1986 & JP-A-61 144 131 (TOSHIBA)

## Beschreibung

Die Erfindung bezieht sich auf ein Funkgerät mit Sende-/Empfangseinrichtungen für die Verwendung in einem TDMA-Funksystem.

Bei TDMA- (Time Division Multiple Access) Systemen senden die Mobilgeräte nur für relativ kurze Zeit. Diese Pulsbelastung führt zu einer Reihe von Problemen, nämlich einer relativ hohen Stromaufnahme in den Bursts sowie einer Verringerung der Lebensdauer der Batterie durch die Pulsbelastung, so daß nur geeignete Batterien verwendbar sind. Ferner ist die Schaltung für den höchsten vorkommenden Strom auszulegen, wobei Leitungs- und Schaltwiderstande ebenso wie die Innenwiderstände der Batterie sehr kritisch sind. Schließlich beeinflussen die Impulsströme auch umliegende Schaltungsteile, wie z.B. NF-Verstärker. Problematisch ist ferner, daß Endstufen nicht über den gesamten Bereich der Versorgungsspannung mit ihrem optimalen Wirkungsgrad arbeiten und meist an der unteren Grenze der Batteriespannung an ihrer Leistungsgrenze sind.

In der JP-A-4315320 ist ein Funkgerät mit Sende-/Empfangseinrichtungen für die Verwendung in einem Burst-Funksystem beschrieben, bei dem parallel zur Endstufe der Sende-/Empfangseinrichtung ein Kondensator zu deren Pufferung geschaltet ist.

Der Erfindung liegt die Aufgabe zugrunde, die mit der Pulsbelastung verbundenen Probleme in einfacher Weise zu lösen.

Diese Aufgabe wird gemäß der Erfindung in der Weise gelöst, daß parallel zur Endstufe der Sende-/Empfangseinrichtung ein Kondensator zu deren Pufferung geschaltet ist, der mit einem Konstantstrom bis auf einen bestimmten Spannungswert aufgeladen und während der Aussendung der Sendebursts entladen wird und daß im Stromzuführungsweg der Endstufe ein strombegrenzter Schaltregler eingeschaltet ist.

Nachstehend wird die Erfindung anhand von in der Zeichnung dargestellten Ausführungsbeispielen näher erläutert.

Es zeigen:
- Figur 1: eine Schaltung mit Einrichtungen zur Pufferung der Endstufe,
- Figur 2: in einem Diagramm den Spannungsverlauf am Pufferkondensator,
- Figur 3: in einem Diagramm den Strom aus der Batterie und
- Figur 4: eine Schaltung gemäß Figur 1 mit strombegrenztem Schaltregler und Pufferkondensator.

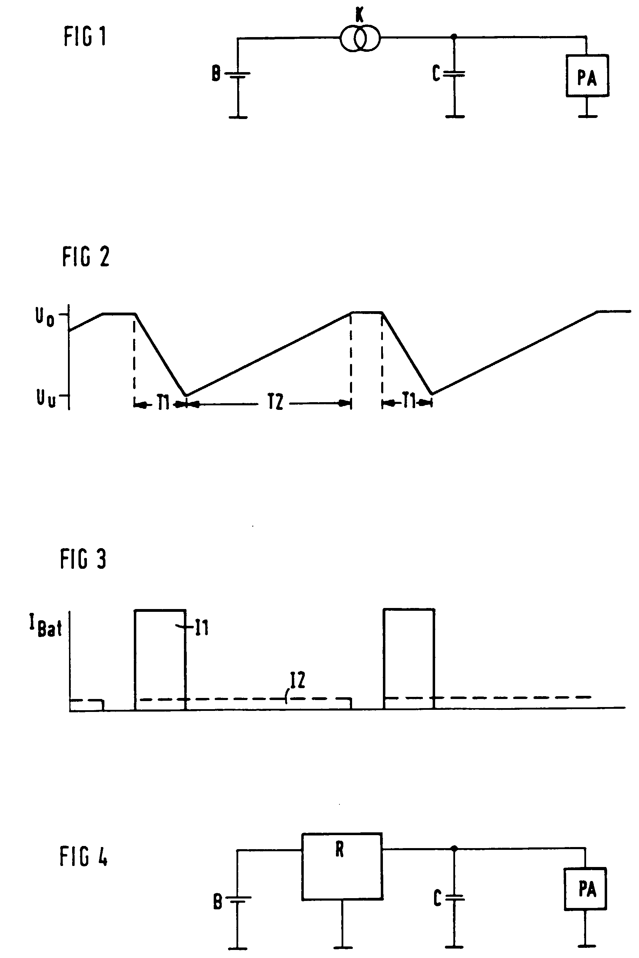

Die Schaltung gemäß Figur 1 enthält eine Batterie B für die Stromversorgung der Endstufe PA, eine im Stromzuführungsweg liegende Konstantstromquelle K sowie einen parallel zur Endstufe geschalteten Pufferkondensator C. Der Pufferkondensator C wird mit einem Konstantstrom bis auf einen bestimmten Spannungswert aufgeladen. In den Sendebursts wird dieser Kondensator C entladen und stellt den benötigten Endstufenstrom zur Verfügung.

Der zeitliche Verlauf der Spannung am Kondensator C ist im Diagramm gemäß Figur 2 dargestellt. Der obere Spannungswert ist mit Uₒ, der untere Spannungswert mit Uᵤ bezeichnet. Im aufgeladenen Zustand des Kondensators hat die Spannung den oberen Wert Uₒ. Von diesem oberen Spannungswert fällt die Spannung während der Aussendung des Sendebursts (Zeitbereich T1) auf den unteren Spannungswert Uᵤ ab. Im anschließenden Zeitbereich T2, in dem der Kondensator C auf den Spannungswert Uₒ aufgeladen wird, steigt die Spannung wieder auf den oberen Wert Uₒ an. Dieser Spannungswert bleibt erhalten bis zum Aussenden des nächsten Sendebursts mit erneutem Abfall der Spannung von Uₒ auf Uᵤ.

Der Strom aus der Batterie B ist in einem darunterliegenden Diagramm dargestellt. Dabei sind die beiden Varianten für den Strom ohne und mit Pufferkondensator gezeigt. Für den ersten Fall (Strom Ilohne Pufferkondensator) hat der Strom in den Zeitbereichen T1, also bei der Aussendung eines Sendebursts einen hohen Wert. Dies ist durch die Rechtecke mit ausgezogener Linienführung dargestellt. Im zweiten Fall (Strom I2 mit Pufferkondensator) hat der Strom während der Aufladezeit des Pufferkondensators und der Aussendung des Sendebursts einen wesentlich niedrigeren Wert (strichliert gezeichneter Verlauf). Für den Strom insgesamt gilt: ∫ I_{Burst} ≅ ∫ I_{Buffer}.

Figur 4 zeigt eine Schaltung mit einem strombegrenzten Schaltregler R im Stromzuführungsweg der Endstufe PA. Durch die Kombination eines Schaltreglers R mit einem Pufferkondensator C wird die sogenannte Softstartfunktion des Schaltreglers genutzt, die eine einfache Realisierung einer Konstantstromquelle ohne die sonst auftretenden Wärmeverluste erlaubt. Der Schaltregler muß aufgrund der Pufferung nur für den Pufferstrom und nicht für den hohen Burststrom ausgelegt sein. Dadurch werden die Kosten und die Größe der Bauteile deutlich gesenkt. Diese Schaltung ist auch in Bezug auf EMV sehr unkritisch.

## Patentansprüche

1. Funkgerät mit Sende-/Empfangseinrichtungen für die Verwendung in einem TDMA-Funksystem, bei dem parallel zur Endstufe (PA) der Sende-/Empfangseinrichtung ein Kondensator (C) zu deren Pufferung geschaltet ist
**dadurch gekennzeichnet**, daß der Kondensator (C) mit einem Konstantstrom bis auf einen bestimmten Spannungswert aufgeladen und während der Aussendung der Sendebursts entladen wird und daß im Stromzuführungsweg der Endstufe (PA) zwischen Mitteln zur Stromversorgung (B) und dem Kondensator (C) ein strombegrenzter Schaltregler (R) eingeschaltet ist.

## Claims

1. Radio equipment with transmit/receive facilities for use in a TDMA radio system, having a capacitor (C) connected in parallel to the output stage (PA) of the transmit/receive facility for buffering,
**characterized** in that the capacitor (C) is charged by a constant current up to a defined voltage and is discharged during transmission of the send bursts, and that a current-limited switched-mode regulator (R) is connected in the power supply path of the output stage (PA) between the power supply means (B) and the capacitor (C).

## Revendications

1. Appareil radio avec des dispositifs d'émission/réception pour l'utilisation dans un système radio AMRT, dans lequel un condensateur (C) est monté en tampon, en parallèle sur l'étage de sortie (PA) du dispositif d'émission/réception,
**caractérisé par le fait**
que le condensateur (C) est chargé par un courant constant jusqu'à une tension déterminée et qu'il est déchargé pendant la vague d'émission et par le fait que, dans le circuit d'alimentation de l'étage de sortie (PA), un régulateur de couplage à limitation de courant (R) est connecté entre des moyens d'alimentation en courant (B) et le condensateur (C).
